(19) Europäisches Patentamt
European Patent Office
Office européen des brevets

(11) EP 4 763 917 A1

(12) **EUROPEAN PATENT APPLICATION**

(43) Date of publication:
**24.06.2026 Bulletin 2026/26**

(21) Application number: **24307199.0**

(22) Date of filing: **19.12.2024**

(51) International Patent Classification (IPC):
***C08L 77/02*** *(2006.01)* *C08G 69/14* *(2006.01)*
*C08G 69/40* *(2006.01)*

(52) Cooperative Patent Classification (CPC):
(C-Sets available)
**C08L 77/02;** C08G 69/14; C08G 69/40;
C08L 2205/02; C08L 2205/03 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **ARKEMA FRANCE**
**92800 Puteaux (FR)**

(72) Inventors:
- **MA, YiYuan (Tina)**
  **Changshu, Jiangsu, 215522 (CN)**
- **PRENVEILLE, Thomas**
  **King of Prussia, 19406-0936 (US)**

(74) Representative: **Bandpay & Greuter**
**11, rue Christophe Colomb**
**75008 Paris (FR)**

# (54) TRANSLUCENT POLYAMIDE COMPOSITION

(57) The present invention relates to a translucent composition comprising :
a) From 55 to 97.99% by weight, based on the total weight of the composition, of a semi-crystalline polyamide matrix comprising :
- 45 to 99% by weight of a polyamide A based on the total weight of the matrix, wherein the C/N ratio of the polyamide A is greater than 6.5
- 1 to 55% by weight of a polyamide B based on the total weight of the polyamide matrix, wherein the C/N ratio of the polyamide A is greater than 6.5;
polyamides A and B have, in absolute value, at least one difference in C/N ratios equal to | C/N ratio (A) - C/N ratio (B)| ≤ 3,
the polyamide A comprising at least 45 mol of at least one unit comprising a number of carbon atoms between the amide functional groups (including the carbonyl of the amide) denoted C1,
the polyamide B comprising at least 30 mol% of at least one unit comprising a number of carbon atoms between the amide functions (including the carbonyl of the amide) denoted C2,
with at least one of the equations |C1-C2| ≤ 3 being fulfilled, if the polyamides A and B each comprise more than one C1 and/or more than one C2 ;

b) from 2 to 25% by weight, preferably from 3 to 20%,based on the total weight of the composition, of short glass fibers;
c) from 0.01 to 20% by weight, based on the total weight of the composition, of acid modified polymer impact modifier comprising three or more blocks of polyamide.

EP 4 763 917 A1

(52) Cooperative Patent Classification (CPC): (Cont.)

C-Sets
**C08L 77/02, C08L 77/02, C08L 77/02, C08K 7/14**

## Description

### Field of the disclosure

The invention relates to a translucent polyamide comprising specific glass fibers and a polyamide matrix made of at least two semi-crystalline polyamides. The invention also refers to a process for preparing said composition and its use for the manufacture of sports articles.

### Background

Conventionally, transparent resins are used as materials for melded products required to have usual transparency, such as automotive parts, lighting equipment, electrical parts, panels, housings, and sports articles. In recent years, particularly, the range of applications of the resins as optical materials required to have excellent optical properties has been extended. In particular, the sports markets are currently looking for translucent compositions exhibiting good mechanical properties after molding.

Polyamide resin derived from a structure with polymerized monomers has low birefringence and high transparency, and hence the resin is used as a transparent resin for optical materials, and the like. In that respect, polyamide resin can be used to make sports articles and more specifically sport shoe outsole. Due to its transparency, the design pattern & colour of the midsole can be seen through the polymer outsole by human eyes.

For this application, it is sometimes desired to increase mechanical properties such as stiffness, strength, warpage reduction and surface scratch resistance. For such a reason, glass fibers and impact modifiers can be added to modify the polyamides.

EP3966284 relates to a polyamide composition comprising at least one semi-crystalline aliphatic polyamide and an S-glass fiber, wherein the polyamide composition comprises neither polyolefinic impact modifier nor core-shell modifier.

EP3512914 discloses a polymer composition comprising a linear aliphatic polyamide, an S-glass fibre and a polyolefinic impact modifier.

EP3486287 relates to a semi-transparent polymer composite comprising linear aliphatic polyamide, an S glass fiber and a core-shell impact modifier.

EP3444114 concerns a polyamide moulding compound containing a polyamide mixture consisting of a semi-crystalline polyamide and an amorphous or micro-crystalline polyamide, at least one glass filler and at least one additive.

EP3309199 refers to polyamide moulding compounds comprising a single amorphous copolyimide, at least one monomeric lactam and/or polyamide 12, at least one glass filler and additives.

Unfortunately, glass fibers and/or impact modifiers can increase the crystallization of polyamide leading to opaque polyamide. From the perspective of aesthetic, it is necessary to keep excellent optical properties when the polyamides are modified to improve the mechanical properties. In addition, the use of amorphous polyamide instead of semi-crystalline aliphatic polyamide might hamper the mechanical properties (lower fatigue resistance) and the processability (flowability) of the composition (lower fatigue resistance) while increasing its cost.

There is still a need to develop a polyamide composition offering an improved transparency, color and mechanical performance, particularly flexibility, as required by the sports markets to make sport shoes.

The aim of the present invention is to provide a polyamide composition with outstanding optical properties such as high transmittance and low haze as well as excellent mechanical properties such as high flexural modulus (>1000 MPa).

It has been surprisingly found that a combination of at least two specific semi-crystalline polyamides with specific glass fibers and PEBA copolymer allows to get better mechanical properties without adversely affecting the transparency.

### Summary

The invention relates to a translucent composition comprising :

a) From 55 to 97.99% by weight, based on the total weight of the composition, of a semi-crystalline polyamide matrix comprising :

- 45 to 99% by weight of a polyamide A based on the total weight of the matrix, wherein the C/N ratio of the polyamide A is greater than 6.5, preferably greater than 8, even more preferably greater than 9,
- 1 to 55% by weight of a polyamide B based on the total weight of the polyamide matrix, wherein the C/N ratio of the polyamide A is greater than 6.5, preferably greater than 8, even more preferably greater than 9 ;

polyamides A and B have, in absolute value, at least one difference in C/N ratios equal to | C/N ratio (A) - C/N ratio

(B) | ≤ 3, preferably | C/N ratio (A) - C/N ratio (B) | ≤ 2, even more preferably | C/N ratio (A) - C/N ratio (B) | ≤ 1,

the polyamide A comprising at least 45 mol%, preferably 65 mol%, even more preferably 90 mol%, of at least one unit comprising a number of carbon atoms between the amide functional groups (including the carbonyl of the amide) denoted C1,

the polyamide B comprising at least 30 mol%, preferably at least 40 mol%, advantageously at least 45 mol%, of at least one unit comprising a number of carbon atoms between the amide functions (including the carbonyl of the amide) denoted C2,

with at least one of the equations IC1-C2 | ≤ 3 being fulfilled, if the polyamides A and B each comprise more than one C1 and/or more than one C2 ;

b) from 2 to 25% by weight, preferably from 3 to 20%, based on the total weight of the composition of short glass fibers ;
c) from 0.01 to 20% by weight, based on the total weight of the composition, of a copolymer containing polyamide blocks and polyether blocks (PEBA copolymer).

Preferably, the following condition is fulfilled | ratio C/N(A) - ratio C/N (B) | ≤ 2, preferably | ratio C/N(A) - ratio C/N (B) | ≤ 1.
Preferably, the following equations is fulfilled | C1-C21 ≤ 2, preferably | C1-C21 ≤ 1.
Preferably, the polyamide A and the polyamide B have a linear aliphatic structure.
Preferably, the polyamide A and the polyamide B are partially or totally bio-sourced.
Preferably, the polyamide A is chosen among PA10, PA11, PA12, PA1010, PA1012 and PA612, preferably among PA11 and PA12.
Preferably, the polyamide B is chosen among PA10, PA11, PA12, PA1010, PA1012 and PA612, preferably among PA12, PA1010 and PA1012.
Preferably, the matrix comprises a blend of polyamide A and polyamide B chosen among :

- PA 12 as Polyamide A and PA 1012 as Polyamide B
- PA 11 as Polyamide A and PA 12 as Polyamide B ;
- PA 11 as Polyamide A and PA 1012 as Polyamide B ;
- PA 11 as Polyamide A and PA 1010 as Polyamide B.

In one embodiment, the composition comprises 0.1% to 10% by weight, preferably 0.1% to 3% by weight of additives based on the total weight of the composition, chosen among stabilizers, fluidizing agent, dye, surfactants, whitening agents, antioxidants chain extenders, lubricants, nucleating agents, waxes and their mixture, preferably stabilizers, antioxidants and their mixture.
Preferably, the glass fibers are chosen among :

- E glass fiber comprising from : from 53 to 55 wt% $SiO_2$, from 20 to 24 wt% MgO+CaO, from 6 to 9 wt% $B_2O$, from 12 to 16 wt% $Al_2O_3$ based on the total weight of the glass fiber;
- NE glass fiber comprising from 53 to 57 wt% $SiO_2$, from 13 to 16 wt% $Al_2O_3$, from 15 to 19 wt% $B_2O_3$, from 3 to 6 wt% MgO, from 2 to 5 wt% CaO, from 1 to 4 wt% $TiO_2$, from 0 to 0.2 wt% $Li_2O$, from 0 to 0,2 wt% $Na_2O$, from 0 to 0.2 wt% $K_2O$, from 0.2 to 1 wt% $F_2$; from 7 to 10 wt% MgO+CaO based on the total weight of the glass fiber; and their mixtures. preferably NE.

Preferably, the glass fibers are flat.
Preferably, the polyamide block of the PEBA copolymer is chosen from blocks of PA 6, PA610, PA 11, PA 12, PA 5.4, PA 5.9, PA 5.10, PA 5.12, PA 5.13, PA 5.14, PA 5.16, PA 5.18, PA 5.36, PA 6.4, PA 6.9, PA 6.10, PA 6.12, PA 6.13, PA 6.14, PA 6.16, PA 6.18, PA 6.36, PA 10.4, PA 10.9, PA 10.10, PA 10.12, PA 10.13, PA 10.14, PA 10.16, PA 10.18, PA 10.36, PA 12.4, PA 12.9, PA 12.10, PA 12.12, PA 12.13, PA 12.14, PA 12.16, PA 12.18 or PA 12.36, their mixture, or their copolyamides, and/or the polyether block of the PEBA copolymer is chosen from PEG, PPG, PO3G, PTMG, their mixtures or their copolymers.
A composition according to any of claims 1 to 12, wherein the polyamide block and polyether block of the PEBA copolymer are chosen among :

- PA 11 as polyamide block and PEG as polyether block;

- PA 11 as polyamide block and PTMG as polyether block ;
- PA 12 as polyamide block and PEG as polyether block ;
- PA 12 as polyamide block and PTMG as polyether block.

The invention also relates to a process for preparing the composition according to the invention, comprising the following steps :

a) mixing the polyamide A, the polyamide B and the glass fibers in an extruder at a temperature from 230 to 330°C, preferably from 230 to 300°C to obtain granules
b) injecting the granules at a temperature from 230 to 330°C, preferably from 230 to 300°C on an injection press to obtain the articles.

The invention also refers to the use of the composition according to the invention for sports article, in particular a sports boot, in particular a ski boot or part of a ski boot or a spiked rigid boot, such as a soccer boot, rugby boot or American football boot, a hockey boot or part of a hockey boot, or a running shoe, a golf ball or part of a golf ball, or a lacrosse stick, a hockey article such as a helmet and sports articles for the protection of the head, shoulders, elbows, hands, knees, back or shin, such as helmets, gloves, shoulder pads, elbow pads, knee pads or shin guards.

**Detailed description**

The invention relates to a translucent composition comprising :

a) From 55 to 97.99% by weight, based on the total weight of the composition, of a semi-crystalline polyamide matrix comprising :

- 45 to 99% by weight of a polyamide A based on the total weight of the matrix, wherein the C/N ratio of the polyamide A is greater than 6.5, preferably greater than 8, even more preferably greater than 9,
- 1 to 55% by weight of a polyamide B based on the total weight of the polyamide matrix, wherein the C/N ratio of the polyamide A is greater than 6.5, preferably greater than 8, even more preferably greater than 9 ;

  polyamides A and B have, in absolute value, at least one difference in C/N ratios equal to | C/N ratio (A) - C/N ratio (B) | ≤ 3, preferably | C/N ratio (A) - C/N ratio (B) | ≤ 2, even more preferably | C/N ratio (A) - C/N ratio (B) | ≤ 1,

  the polyamide A comprising at least 45 mol%, preferably 65 mol%, even more preferably 90 mol%, of at least one unit comprising a number of carbon atoms between the amide functional groups (including the carbonyl of the amide) denoted C1,

  the polyamide B comprising at least 30 mol%, preferably at least 40 mol%, advantageously at least 45 mol%, of at least one unit comprising a number of carbon atoms between the amide functions (including the carbonyl of the amide) denoted C2,

  with at least one of the equations IC1-C2 | ≤ 3 being fulfilled, if the polyamides A and B each comprise more than one C1 and/or more than one C2 ;

b) from 2 to 25% by weight, preferably from 3 to 20%, of short glass fibers;
c) from 0.01 to 20% by weight, based on the total weight of the composition, of a copolymer containing polyamide blocks and polyether blocks (PEBA copolymer).

***Polyamides***

A semi-crystalline polyamide (PA), within the scope of the invention, refers to a polyamide which has a melting temperature (Tm) in DSC according to standard ISO 11357-3:2013, and an enthalpy of crystallization during the cooling step at a rate of 20 K/min in DSC measured according to standard ISO 11357-3 (2013) greater than 30 J/g, preferably greater than 40 J/g.
Preferably, polyamides A and B in the matrix of the composition according to the invention are obtained by polycondensation of at least one unit chosen from a C6 to C18 alpha, omega-aminocarboxylic acid, a C5 to C12 lactam and

a (Ca diamine).(Cb diacid) unit, wherein "a" represents the number of carbon atoms of the diacid and "b" represents the number of carbon atoms of the diacid, "a" and "b" are from 4 to 36.

Preferably, polyamides are obtained by polycondensation of at least one lactam chosen from pyrrolidinone, 2-piperidinone, enantholactam, caprylolactam, pelargolactam, decanolactam, undecanolactam and lauryllactam.

Preferably, polyamides in the composition according to the invention are obtained by polycondensation of at least one amino acid chosen from 9-aminononanoic acid, 10-aminododecanoic acid (denoted 10), 11-amino-undecanoic acid (denoted 11) and 12-aminododecanoic acid (denoted 12).

Preferably, polyamides are obtained by polycondensation of at least one unit corresponding to the formula (Ca diamine).(Cb diacid), wherein "a" represents the number of carbon atoms of the diamine and "b" represents the number of carbon atoms of the diacid, "a" and "b" are from 4 to 36.

Preferably, the unit (Ca diamine) is aliphatic. The diamine can be chosen from butanediamine (a=4), pentanediamine (a=5), hexanediamine (a=6), heptanediamine (a=7), octanediamine (a=8), nonanediamine (a=9), decanediamine (a= 10), undecanediamine (a= 11), dodecanediamine (a= 12), tridecanediamine (a=13), tetradecanediamine (a=14), hexadecanediamine (a= 16), octadecanediamine (a= 18).

Preferably, the unit (diacid at Cb) is aliphatic. The diacid can be chosen from succinic acid (b=4), pentanedioic acid (b=5), adipic acid (b=6), heptanedioic acid (b=7), octanedioic acid (b=8), azelaic acid (b=9), sebacic acid (b= 10), undecanedioic acid (b= 11), dodecanedioic acid (b= 12), brassylic acid (b= 13), tetradecanedioic acid (b= 14), hexadecanedioic acid (b= 16), octadecanedioic acid (b= 18).

Preferably, the diacid is chosen from adipic acid, suberic acid, azelaic acid, sebacic acid, undecanedioic acid, dodecanedioic acid, brassylic acid, tetradecanedioic acid, pentadecanedioic acid, hexadecanedioic acid and octadecanedioic acid.

Preferably, the following condition is fulfilled in the composition according to the invention : $|$ ratio C/N(A) - ratio C/N (B) $| \leq 2$, preferably $|$ ratio C/N(A) - ratio C/N (B) $| \leq 1$.

Preferably, the following equation is fulfilled in the composition according to the invention: $| C1-C2 | < 2$, preferably $| C1-C21 \leq 1$.

Preferably, the polyamide A and the polyamide B are partially or totally bio-sourced. A bio-sourced raw material is a natural resource, whether animal or plant-based, whose stock can regenerate over a short period of time on a human scale. In particular, this stock must be able to renew itself as quickly as it is consumed.

*Polyamide A*

The polyamide matrix comprises from 45 to 99% by weight, preferably from 50% to 85% by weight and even more preferably from 50% to 75% by weight of a polyamide A based on the total weight of the matrix.

Preferably, the C/N ratio of the polyamide A is greater than 6.5, preferably greater than 8, even more preferably greater than 9.

Preferably, the polyamide A has a linear aliphatic structure.

Preferably, the polyamide A is chosen from PA 11, PA 12, PA 1010, PA 1012, PA 510, PA 513, PA 516, PA 512, PA 610, PA 612, PA613, PA912, PA6/11, PA6/12, PA11/12, PA 6/11/12, PA 6/66/12, PA 6/1010, PA 6/1012, PA 6/1010/1012, PA 6/1012/12, PA 6/66/11/12, PA 6/1010/1012/1014, as well as their copolyamides.

Preferably, the polyamide A is a homopolyamide. This homopolyamide can be obtained by the polycondensation of a lactam, an amino acid or a unit (diamine at Ca).(diacid at Cb), wherein Ca and Cb are as defined above.

Preferably, the polyamide A is chosen among PA10, PA11, PA12, PA1010, PA1012 and PA612, more preferably from PA11 and PA12, even more preferably, the polyamide A is PA11.

PA10, PA1010 and PA1012 are bio-sourced polyamides. Indeed, the main monomer used in the production of these polyamides, dodecanedioic acid (DDDA), is bio-sourced and can be obtained from renewable resources such as castor oil. In addition, these polyamides are synthesized by polymerizing dodecanedioic acid with diamines, often with 1,10-diaminodecane, which is also derived from renewable sources.

The basic raw material for PA11 is castor oil, extracted from the castor oil plant from castor seeds. PA11 is obtained by polycondensation of amino-11-undecanoic acid. PA11 has the advantage of being made from plant-based raw materials. Plant-based materials can be grown in large quantities across most of the globe and are bio-sourced.

*Polyamide B*

The polyamide matrix comprises from 1 to 45% by weight, preferably from 10 to 45% by weight and even more preferably from 20 to 45% by weight of a polyamide B based on the total weight of the matrix.

Preferably, the polyamide B has a linear aliphatic structure.

Preferably, the C/N ratio of the polyamide B is greater than 6.5, preferably greater than 8, even more preferably greater than 9.

Preferably, the polyamide B is chosen from PA 11, PA 12, PA 1010, PA 1012, PA 510, PA 513, PA 516, PA 512, PA 610, PA 612, PA613, PA912, PA6/11, PA6/12, PA11/12, PA 6/11/12, PA 6/66/12, PA 6/1010, PA 6/1012, PA 6/1010/1012, PA 6/1012/12, PA 6/66/11/12, PA 6/1010/1012/1014, as well as their copolyamides.
Preferably, the polyamide B is a homopolyamide. This homopolyamide can be obtained by the polycondensation of a lactam, an amino acid or a unit (diamine at Ca).(diacid at Cb), wherein Ca and Cb are as defined above.
Preferably, the polyamide B is chosen from PA10, PA11, PA12, PA612, PA1010 and PA1012, more preferably from PA1012 and PA12, even more preferably from, the polyamide B is PA12.

*Ratio difference*

Polyamides A and B have, in absolute value, at least one difference in C/N ratios equal to | C/N ratio (A) - C/N ratio (B) | ≤ 3, preferably | C/N ratio (A) - C/N ratio (B) | ≤ 2, even more preferably | C/N ratio (A) - C/N ratio (B) | ≤ 1.

*Difference in length of repeat units*

The polyamide A comprises at least 45 mol%, preferably 65 mol%, even more preferably 90 mol%, of at least one unit comprising a number of carbon atoms between the amide functional groups (including the carbonyl of the amide) denoted C1.
The polyamide B comprises at least 30 mol%, preferably at least 40 mol%, advantageously at least 45 mol%, of at least one unit comprising a number of carbon atoms between the amide functions (including the carbonyl of the amide) denoted C2.
Polyamides A and B are chosen so as to comply with the difference in absolute value IC1-C2| ≤ 3, preferably IC1-C2 | ≤ 2, even more preferably IC1-C2| ≤ 1.
If the polyamide A is formed from only one type of unit, such as lactam or amino acid homopolyamides, then the polyamide A has only one C1 number. For example, PA11 has a C1 number equal to 11.
If the polyamide A is formed from at least two types of unit, such as homopolyamides formed from XY units (diamine.diacid) or copolyamides, then the polyamide A comprises several C1 numbers. For example, PA610 has a C1 number equal to 6 and a C1 number equal to 10; PA11/610 has a C1 number equal to 11, a C1 number equal to 6, a C1 number equal to 10. In other words, if the polyamide A has n units, then n C1 will be considered for evaluating the condition | C1-C2| ≤ 3, n being a natural number from 1 to 6.
The explanations given for the number C1 also apply to the number C2. In other words, if the polyamide B has m units, then m C2 will be considered for evaluating the condition | C1-C2| ≤ 3, m being a natural number from 1 to 6.
If polyamides A1 and A2 are formed from several C1 and several C2, at least one condition | $C1_n$-$C2_m$| ≤ 3 shall be met. Preferably, all the conditions | $C1_n$-$C2_m$| ≤ 3 shall be met.
As a first example, a composition may comprise 70% by weight of PA1012 and 10% by weight of PA12. The following conditions have to be verified :
The predominant polyamide A is PA1012 (50/50 molar ratio) with $C1_1$ = 10 and $C1_2$ = 12.
The polyamide B is PA12 with C2 = 12.
Regarding the first condition | ratio C/N(A1) - ratio C/N (A2) | ≤ 3 :
ratio C/N(A) = 11; ratio C/N (B) = 12 ; | ratio C/N(A) - ratio C/N (B) | = 111- 121 = 1,
**[0066]** The first condition is met: 1≤ 3 .
Regarding the second condition IC1-C2| ≤ 3 :

$$I\ C1_1\text{-}C2\ |\ = I10\text{-}12I = 2 \text{ et } I\ C1_2\text{-}C2\ |\ = I12\text{-}12I = 0,$$

The second condition is met as well : 2 ≤ 3 et 0 ≤ 3.
As a first example, a composition may comprise 70% by weight of PA1012 and 10% by weight of PA12, based on the total weight of the composition.
The following conditions have to be verified :
The predominant polyamide A is PA1012 (50/50 molar ratio) with $C1_1$ = 10 and $C1_2$ = 12.
The polyamide B is PA12 with C2 = 12.
Regarding the first condition | ratio C/N(A) - ratio C/N (B)| ≤ 3 :
ratio C/N(A) = 11; ratio C/N (B) = 12 ; | ratio C/N(A) - ratio C/N (B) | = 111- 121 = 1,
**[0073]** The first condition is met: 1≤ 3 .
Regarding the second condition IC1-C2| < 3 :

$$I\ C1_1\text{-}C2\ |\ = I10\text{-}12I = 2 \text{ et } I\ C1_2\text{-}C2\ |\ = I12\text{-}12I = 0,$$

The second condition is met as well : $2 \leq 3$ et $0 \leq 3$.

As a second example, a composition may comprise 80% by weight of PA11 and 8% by weight of PA6/812 (80/20 molar ratio) based on the total weight of the composition.

The following conditions have to be verified :
The predominant polyamide A is PA11 with C1 = 11.

The polyamide B is PA6/812 with $C2_1 = 6$, $C2_2 = 8$ and $C2_3 = 12$.

Regarding the first condition | ratio C/N(A) - ratio C/N (B) | ≤ 3 :

ratio C/N(A) = 11; ratio C/N (B) = (0.8*6 + 0.2*10) = 6.8 ;
| ratio C/N(A) - ratio C/N (B) | = |11 - 6.8| = 4.2.

The first condition is not met: 4.2 > 3.

Regarding the second condition IC1-C2| ≤ 3 :
The content of unit 6 is at least 30 mol%. This unit 6 should therefore be considered in comparison with units 8 and 12.

$$|C1 - C2_1| = |11 - 6| = 5,$$

The second condition is not met: 5 > 3.

The polyamide B does not meet the claimed conditions, the composition therefore does not fall within the scope of the invention.

The polyamide B should slightly hinder the crystallinity of the polyamide A. In that respect, a low content of polyamide B must be kept in the polyamide matrix, i.e. from 1% to 40% by weight based on the total weight of the matrix. In addition, chains length of polyamide B must be close to those of polyamide A, *i.e.* | ratio C/N(A) - ratio C/N (B) | ≤ 3.

Preferably, C1 and C2 are higher than or equal to 8, preferably higher than or equal to 9.

Preferably, the composition according to the invention, wherein the matrix comprises a blend of polyamide A and polyamide B chosen among :

- PA 12 as Polyamide A and PA 1012 as Polyamide B ;
- PA 11 as Polyamide A and PA 12 as Polyamide B ;
- PA 11 as Polyamide A and PA 1012 as Polyamide B ;
- PA 11 as Polyamide A and PA 1010 as Polyamide B.

***Short glass fiber***

According to the invention, the composition comprises from 2 to 25% by weight, preferably from 3 to 20%, based on the total weight of the composition, of short glass fibers.

In the present invention, "short glass fibers" refers to glass fibers with an average length ranging from 1 to 10 mm, preferably from 3 to 6 mm. The average length of the fibres is determined in accordance with standard Q/JS J0361.

The short glass fibers are chosen among :

- E glass fiber comprising from 53 to 55 wt% $SiO_2$, from 20 to 24 wt% MgO+CaO, from 6 to 9 wt% $B_2O$, from 12 to 16 wt% $Al_2O_3$ based on the total weight of the glass fibre ;
- NE glass fiber comprising from 53 to 57 wt% $SiO_2$, from 13 to 16 wt% $Al_2O_3$, from 15 to 19 wt% $B_2O_3$, from 3 to 6 wt% MgO, from 2 to 5 wt% CaO, from 1 to 4 wt% $TiO_2$, from 0 to 0.2 wt% $Li_2O$, from 0 to 0,2 wt% $Na_2O$, from 0 to 0.2 wt% $K_2O$, from 0.2 to 1 wt% $F_2$; from 7 to 10 wt% MgO+CaO based on the total weight of the glass fiber; and their mixtures ;
- Glass fiber comprising from 56-64% by weight of $SiO_2$, 12-20% by weight of $Al_2O_3$, 4-14% by weight $B_2O_3$, 5-12% by weight of $Na_2O$+$K_2O$, 4-8% by weight of MgO, 0.5-4.5% by weight of CaO; 0-0.6% by weight of $Fe_2O_3$, 0-1% by weight of $TiO_2$;
- Glass fiber comprising from 68-74% by weight of $SiO_2$, 2-5% by weight of $Al_2O_3$, 2-5% by weight of $B_2O_3$, 2-10% by weight of CaO, 0-5% by weight of ZnO, 0-5% by weight of SrO, 0-1% by weight of BaO, 1-5% by weight of MgO, 0-5% by weight of $Li_2O$, 5-12% by weight of $Na_2O$ and 0-10% by weight of $K_2O$, where a total amount of $Li_2O$, $Na_2O$, and $K_2O$ is 8-12% by weight ;
- S-glass fiber comprising from 64-66% by weight of $SiO_2$, 24-25% by weight of $Al_2O_3$, 9.5-10% by weight of MgO, 0-0.2% by weight of CaO, 0-0.2% by weight of $Na_2O$+$K_2O$, and 0-0.1% by weight of $Fe_2O_3$.

Preferably the short glass fibers are NE glass fiber.

In one embodiment, S glass fibers comprising 64-66% by weight of $SiO_2$, 24-25% by weight of $Al_2O_3$, 9.5-10% by weight of MgO, 0-0.2% by weight of CaO, 0-0.2% by weight of $Na_2O$+$K_2O$, and 0-0.1% by weight of $Fe_2O_3$, based on the

total weight of the glass fiber are excluded from the composition according to the invention.

When the amount of the glass fiber and the polyamide matrix composition are within the abovementioned range, it is possible to produce a molded product that combines good mechanical properties and an excellent transparency.

*Refractive index*

Preferably, the refractive index of the short glass fibers matches the refractive index of the polyamide matrix described above. Preferably, the short glass fibers have a refractive index of 1.50 to 1.54, and even more preferably from 1.50 to 1.52 with respect to light having a wavelength of 589 nm.

The refractive index is measured by GB/T 7962 .1-2010 method or by oil-immersion method.

The refractive index of the glass fiber can be appropriately adjusted to the refractive index of the resin composition.

In the case where the refractive index of the glass fiber is lower than the desired refractive index, the refractive index can be increased, for example, by replacing a portion of the silica (SiO2) with calcium oxide (CaO).

In the case where the refractive index of the glass fiber is higher than the desired refractive index, the refractive index can be lowered, for example, by replacing a portion of the calcium oxide (CaO) with an alkali metal compound.

*Shape and size*

Preferably, the short glass fibers are round (i.e. circular cross sectional area) or flat (i.e. non circular cross sectional area), more preferably flat.

The diameter of the round glass fibers is preferably from 5 to 45 μm, preferably from 5 to 25 μm. The diameter of the glass fibers is determined in accordance with standard ISO 1888:2022.

Flat glass fibers may be described by two diameters "a" and "b". Preferably, the smaller diameter "a" of the flat glass fibers is from 3 to 15 μm, and more preferred from 5 to 10 μm. The greater diameter "b" of the flat glass fibers is preferably from 5 to 28 μm, and even more preferably from 7 to 28 μm. The diameter of the glass fibers is determined in accordance with standard ISO 1888:2022.

The aspect ratio of the flat glass fibers is from 1:10 to 2:1, preferably from 1:8 to 1:1, even more preferably from 1:5 to 1:2.

*Preparation*

Glass fibers can be produced by any spinning process conventionally known for a continuous glass fiber. For example, it is possible to fibrillate the glass by different processes, such as the direct melting process, in which the glass is subjected to continuous vitrification in a furnace, then introduced into a crucible and subjected to spinning by a bushing fitted to the lower part of the crucible, and the remelting process, in which melted glass is transformed into a bead or a rod, followed by remelting and spinning.

Advantageously, the glass fiber is surface-treated with a coupling agent in order to increase the affinity and the adhesion to the resin composition. A good affinity between the glass fiber and the resin composition prevents any decrease in the transparency of the molded product caused by the formation of voids.

Mention may be made, as coupling agents, of those based on silane, on borane, on aluminates, those of titanate type, and the like. In particular, silane coupling agents are preferred as they make possible good adhesion between the polyamide matrix and the glass fibers. Use may be made, as coupling agent of silane type, of aminosilane, epoxysilane and acrylsilane coupling agents and the like. Among silane coupling agents, aminosilane coupling agents are preferred.

In addition, the treatment of the fibers can optionally comprise film-forming agents, lubricating agents, antistatic agents and the like, in addition to the coupling agent. These components can be used alone or in combination. Mention may be made, as examples of film-forming agent, of vinyl acetate, urethane, acrylic, polyester, polyether, phenoxy, polyamide and epoxy resins and/or the like. Mention may be made, as examples of lubricating agent, of aliphatic ester, aliphatic ether, aromatic ester or aromatic ether surface-active agents. Mention may be made, as examples of antistatic agent, of inorganic salts, such as lithium chloride or potassium iodide, and also quaternary ammonium salts, such as ammonium chloride or ammonium ethosulphate.

*Impact modifier*

According to the invention, the composition comprises 0.01 to 20% by weight, based on the total weight of the composition, of a copolymer containing polyamide blocks and polyether blocks (PEBA copolymer).

In one embodiment, the copolymer containing polyamide blocks and polyether blocks (PEBA copolymer) comprises at least one carboxylic chain end having reacted with an epoxide function.

In the context of the present invention, three types of polyamide blocks may advantageously be used for the PEBA copolymer.

According to a first type, the polyamide blocks originate from the condensation of a linear or branched aliphatic, cycloaliphatic or aromatic dicarboxylic acid, in particular those containing from 4 to 36 carbon atoms, preferably those containing from 6 to 18 carbon atoms, and of a linear or branched aliphatic, cycloaliphatic or alkylaromatic diamine, in particular those containing from 2 to 20 carbon atoms, preferably those containing from 4 to 14 carbon atoms.

In one embodiment, the polyamide blocks originate from the condensation of a linear or branched aliphatic, cycloaliphatic or aromatic dicarboxylic acid and of a linear or branched aliphatic or cycloaliphatic diamine.

In one embodiment, the polyamide blocks originate from the condensation of a linear or branched aliphatic or cycloaliphatic dicarboxylic acid and of a linear or branched aliphatic or cycloaliphatic diamine.

As examples of dicarboxylic acids, mention may be made of 1,4-cyclohexanedicarboxylic acid, butanedioic acid, adipic acid, azelaic acid, suberic acid, sebacic acid, dodecanedicarboxylic acid, octadecanedicarboxylic acid, terephthalic acid and isophthalic acid, but also dimerized fatty acids.

As examples of diamines, mention may be made of tetramethylenediamine, hexamethylenediamine, 1,10-decamethylenediamine, dodecamethylenediamine, trimethylhexamethylenediamine, the isomers of bis(4-aminocyclohexyl)methane (BACM), bis(3-methyl-4-aminocyclohexyl)methane (BMACM) and 2,2-bis(3-methyl-4-aminocyclohexyl) propane (BMACP), para-aminodicyclohexylmethane (PACM), isophoronediamine (IPDA), 2,6-bis(aminomethyl)norbornane (BAMN) and piperazine (Pip).

Preferably, polyamide blocks PA 4.12, PA 4.14, PA 4.18, PA 6.10, PA 6.12, PA 6.14, PA 6.18, PA 9.12, PA 10.10, PA 10.12, PA 10.14 and PA 10.18 are used. In the notation PA X.Y, X represents the number of carbon atoms derived from the diamine residues, and Y represents the number of carbon atoms derived from the diacid residues, as is conventional.

According to a second type, the polyamide blocks result from the condensation of one or more $\alpha,\omega$-aminocarboxylic acids and/or of one or more lactams containing from 6 to 12 carbon atoms in the presence of a dicarboxylic acid containing from 4 to 36 carbon atoms or of a diamine. As examples of lactams, mention may be made of caprolactam, oenantholactam and lauryllactam. As examples of $\alpha,\omega$-aminocarboxylic acids, mention may be made of aminocaproic acid, 7-aminoheptanoic acid, 11-aminoundecanoic acid and 12-aminododecanoic acid.

Preferably, the polyamide blocks of the second type are PA 11 (polyundecanamide), PA 12 (polydodecanamide) or PA 6 (polycaprolactam) blocks, and even more preferably, the polyamide block of the second type is PA 11. In the notation PA X, X represents the number of carbon atoms derived from amino acid residues.

According to a third type, the polyamide blocks result from the condensation of at least one $\alpha,\omega$-aminocarboxylic acid (or a lactam), at least one diamine of the abovementioned type and at least one dicarboxylic acid of the abovementioned type.

In this case, the polyamide PA blocks are prepared by polycondensation:

- of the diamine(s) containing X carbon atoms;
- of the dicarboxylic acid(s) containing Y carbon atoms; and
- of the comonomer(s) {Z}, chosen from lactams and $\alpha,\omega$-aminocarboxylic acids containing Z carbon atoms and equimolar mixtures of at least one diamine containing X1 carbon atoms and of at least one dicarboxylic acid containing Y1 carbon atoms, (X1, Y1) being different from (X, Y);
- said comonomer(s) {Z} being introduced in a weight proportion advantageously ranging up to 50%, preferably up to 20%, even more advantageously up to 10% relative to the total amount of polyamide-precursor monomers;
- in the presence of a chain limiter chosen from dicarboxylic acids.

Preferably, the dicarboxylic acid containing Y carbon atoms is used as chain limiter, which is introduced in excess relative to the stoichiometry of the diamine(s).

According to one variant of this third type, the polyamide blocks result from the condensation of at least two $\alpha,\omega$-aminocarboxylic acids or from at least two lactams containing from 6 to 12 carbon atoms or from one lactam and one aminocarboxylic acid not having the same number of carbon atoms, in the optional presence of a chain limiter. As examples of aliphatic $\alpha,\omega$-aminocarboxylic acids, mention may be made of aminocaproic acid, 7-aminoheptanoic acid, 11-aminoundecanoic acid and 12-aminododecanoic acid. As examples of lactams, mention may be made of caprolactam, oenantholactam and lauryllactam. As examples of aliphatic diamines, mention may be made of hexamethylenediamine, dodecamethylenediamine and trimethylhexamethylenediamine. As examples of cycloaliphatic diacids, mention may be made of 1,4-cyclohexanedicarboxylic acid. As examples of aliphatic diacids, mention may be made of butanedioic acid, adipic acid, azelaic acid, suberic acid, sebacic acid, dodecanedicarboxylic acid and dimerized fatty acids. These dimerized fatty acids preferably have a dimer content of at least 98%; they are preferably hydrogenated; they are, for example, products sold under the brand name Pripol by Croda, or under the brand name Empol by BASF, or under the brand name Radiacid by Oleon, and polyoxyalkylene $\alpha,\omega$-diacids. As examples of aromatic diacids, mention may be made of terephthalic acid (T) and isophthalic acid (I). As examples of cycloaliphatic diamines, mention may be made of the

isomers of bis(4-aminocyclohexyl)methane (BACM), bis(3-methyl-4-aminocyclohexyl)methane (BMACM) and 2,2-bis(3-methyl-4-aminocyclohexyl)propane (BMACP), and para-aminodicyclohexylmethane (PACM). The other diamines commonly used may be isophoronediamine (IPDA), 2,6-bis(aminomethyl)norbornane (BAMN) and piperazine.

As examples of polyamide blocks of the third type, mention may be made of the following:

- PA 6.6/6, in which 6.6 denotes hexamethylenediamine units condensed with adipic acid and 6 denotes units resulting from the condensation of caprolactam;

- PA 6.6/6.10/11/12, in which 6.6 denotes hexamethylenediamine condensed with adipic acid, 6.10 denotes hexamethylenediamine condensed with sebacic acid, 11 denotes units resulting from the condensation of aminoundecanoic acid, and 12 denotes units resulting from the condensation of lauryllactam.

The notations PA X/Y, PA X/Y/Z, etc. relate to copolyamides in which X, Y, Z, etc. represent homopolyamide units as described above.

Preferably, the polyamide blocks of the copolymer used in the invention comprise polyamide PA 6, PA 11, PA 12, PA 5.4, PA 5.9, PA 5.10, PA 5.12, PA 5.13, PA 5.14, PA 5.16, PA 5.18, PA 5.36, PA 6.4, PA 6.9, PA 6.10, PA 6.12, PA 6.13, PA 6.14, PA 6.16, PA 6.18, PA 6.36, PA 10.4, PA 10.9, PA 10.10, PA 10.12, PA 10.13, PA 10.14, PA 10.16, PA 10.18, PA 10.36, PA 10.T, PA 12.4, PA 12.9, PA 12.10, PA 12.12, PA 12.13, PA 12.14, PA 12.16, PA 12.18, PA 12.36 or PA 12.T blocks, or mixtures or copolymers thereof; and preferably comprise polyamide PA 6, PA 11, PA 12, PA 6.10, PA 10.10 or PA 10.12 blocks, or mixtures or copolymers thereof.

In one embodiment, the polyamide blocks do not comprise aromatic units.

The polyether blocks are formed from alkylene oxide units.

The polyether blocks may notably be PEG (polyethylene glycol) blocks, i.e. blocks formed from ethylene oxide units, and/or PPG (polypropylene glycol) blocks, i.e. blocks formed from propylene oxide units, and/or PO3G (polytrimethylene glycol) blocks, i.e. blocks formed from trimethylene glycol ether units, and/or PTMG (polytetramethylene glycol) blocks, i.e. blocks formed from tetramethylene glycol units, also known as polytetrahydrofuran. The copolymers may comprise in their chain several types of polyethers, the copolyethers possibly being in block or statistical form.

Use may also be made of blocks obtained by oxyethylation of bisphenols, for instance bisphenol A. The latter products are notably described in document EP 613919.

In one embodiment, the polyether blocks do not comprise polyether blocks derived from ethoxylated bisphenol.

The polyether blocks can also consist of ethoxylated primary amines. Mention may be made, as examples of ethoxylated primary amines, of the products of formula:

[Chem 1]

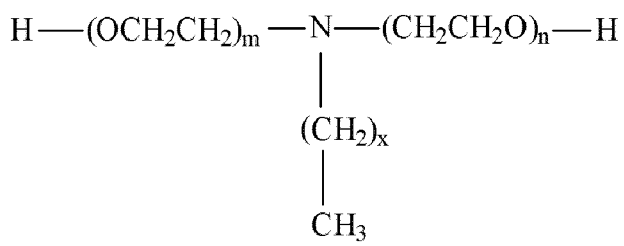

in which m and n are integers between 1 and 20, and x is an integer between 8 and 18. These products are for example commercially available under the brand name Noramox® from Arkema and under the brand name Genamin® from Clariant.

The polyether blocks may comprise α,ω-dihydroxylated aliphatic polyoxyalkylene blocks bearing OH chain ends (referred to as polyether diols).

The polyether blocks may comprise polyoxyalkylene blocks bearing diamine $NH_2$ chain ends (referred to as polyetheramine), such blocks being able to be obtained by cyanoacetylation of α,ω-dihydroxylated aliphatic polyoxyalkylene blocks referred to as polyether diols. More particularly, the commercial products Jeffamine or Elastamine may be used (for example Jeffamine® D400, D2000, ED 2003, XTJ 542, which are commercial products from Huntsman, also described in documents JP 2004346274, JP 2004352794 and EP 1482011).

In one embodiment, the polyether blocks in the copolymer are polyether diols.

The polyether diol blocks are either used in unmodified form and copolycondensed with polyamide blocks bearing carboxylic end groups, or are aminated to be converted into polyetherdiamines and condensed with polyamide

blocks bearing carboxylic end groups.

While the block copolymers described above comprise at least one polyamide block and at least one polyether block as described above, the present invention also covers the copolymers comprising three, four (or even more) different blocks, provided that these blocks include at least polyamide and polyether blocks.

For example, the copolymer according to the invention can be a segmented block copolymer comprising three different types of blocks (or "triblock" copolymer), which results from the condensation of several of the blocks described above. Said triblock may for example be a copolymer comprising a polyamide block, a polyester block and a polyether block or a copolymer comprising a polyamide block and two different polyether blocks, for example a PEG block and a PTMG block.

The PEBA copolymers result from the polycondensation of polyamide blocks bearing reactive ends with polyether blocks bearing reactive ends, such as, inter alia, the polycondensation:

1) of polyamide blocks bearing diamine chain ends with polyoxyalkylene blocks bearing dicarboxylic chain ends;

2) of polyamide blocks bearing dicarboxylic chain ends with polyoxyalkylene blocks bearing diamine chain ends, obtained, for example, by cyanoethylation and hydrogenation of $\alpha,\omega$-dihydroxylated aliphatic polyoxyalkylene blocks, known as polyether diols;

3) of polyamide blocks bearing dicarboxylic chain ends with polyether diols, the products obtained being, in this particular case, polyetheresteramides.

Preferably, the PEBA copolymers result from the polycondensation of polyamide blocks bearing dicarboxylic chain ends with polyether diols.

The polyamide blocks bearing dicarboxylic chain ends originate, for example, from the condensation of polyamide precursors in the presence of a chain-limiting dicarboxylic acid. The polyamide blocks bearing diamine chain ends originate, for example, from the condensation of polyamide precursors in the presence of a chain-limiting diamine.

PEBA copolymers that are particularly preferred in the context of the invention are copolymers including blocks from among: PA 11 and PEG; PA 11 and PTMG; PA 12 and PEG; PA 12 and PTMG; PA 610 and PEG; PA 610 and PTMG; PA 6 and PEG; PA 6 and PTMG.

Preferably, the polyamide matrix and PEBA used in the compositions of the present invention have close refractive index.

In order to adjust the refractive index, the starting materials used to synthesize the PEBA and the polyamide may be varied. The addition of an aromatic compound, preferably an aromatic diacid increases the refractive index of the product. In the case of PEBA, the refractive index decreases if, for example, the PTMG content is increased compared to a pure polyamide having the same composition as the polyamide block of PEBA. For straight-chain aliphatic polyamides, the higher the CH2 number in the unit, the lower the refractive index.

The number-average molar mass of the polyamide blocks in the copolymer according to the invention is preferably from 400 to 20 000 g/mol, more preferentially from 500 to 10 000 g/mol, even more preferentially from 600 to 6000 g/mol.

The number-average molar mass of the polyether blocks is preferably from 100 to 6000 g/mol, more preferentially from 200 to 3000 g/mol.

The number-average molar mass is set by the content of chain limiter. It can be calculated according to the relationship:

$$M_n = n_{monomer} \times MW_{repeating\ unit} / n_{chain\ limiter} + MW_{chain\ limiter}$$

In this formula, $n_{monomer}$ represents the number of moles of monomer, $n_{chain\ limiter}$ represents the number of moles of chain limiter in excess, $MW_{repeating\ unit}$ represents the molar mass of the repeating unit, and $MW_{chain\ limiter}$ represents the molar mass of the chain limiter in excess.

The number-average molar mass of the polyamide blocks and of the polyether blocks can be measured before the copolymerization of the blocks by gel permeation chromatography (GPC).

Advantageously, the mass ratio of the polyamide blocks relative to the polyether blocks of the copolymer is from 0.1 to 20, preferably from 0.3 to 10, or from 0.3 to 5, or even more preferentially from 0.3 to 1.

Preferably, the PEBA copolymer exhibits an instantaneous hardness of less than or equal to 72 Shore D, preferably less than or equal to 55 Shore D, even more preferentially less than or equal to 40 Shore D. The hardness measurements can be carried out according to Standard ISO 868:2003.

Preferably, the PEBA copolymer has a weight-average molar mass Mw of greater than 80000 g/mol. Preferably, the weight-average molar mass of the composition is from 80 000 to 300 000 g/mol, more preferentially from 90000 to 250

000 g/mol, more preferentially still from 100 000 to 200 000 g/mol. The weight-average molar mass is expressed as PMMA equivalents (used as a calibration standard) and can be measured by size exclusion chromatography according to Standard ISO 16014-1:2019, the copolymer being dissolved in hexafluoroisoproponol stabilized with 0.05 M potassium trifluoroacetate for 24 h at ambient temperature at a concentration of 1 g/l to 2 g/l before being passed through the columns, for example at a flow rate of 1 ml/min, the molar mass being measured by a differential refractometer. The size exclusion chromatography can be carried out using columns of modified silica, for example on a set of two columns and a pre-column of modified silica (such as the PGF columns and pre-columns from Polymer Standards Service) comprising a 1000 Å column, having dimensions of 300 x 8 mm and a particle size of 7 μm, a 100 Å column, having dimensions of 300 x 8 mm and a particle size of 7 μm, and a pre-column having dimensions of 50 x 8 mm, for example at the temperature of 40°C.

The PEBA copolymer may have a number-average molar mass Mn ranging from 30000 to 100 000 g/mol, preferably from 35 000 to 80 000 g/mol, more preferentially from 40 000 to 70 000 g/mol. The number-average molar mass is expressed as PMMA equivalents and can be measured according to Standard ISO 16014-1:2019 according to the method described above.

The PEBA copolymer can have a z-average molar mass Mz ranging from 200 000 to 1000 000 g/mol, preferentially between 300 000 and 800 000 g/mol. The z-average molar mass is expressed as PMMA equivalents and can be measured according to Standard ISO 16014-1:2019 according to the method described above.

***Additives***

In one embodiment, the composition comprises from 0.1% to 10% by weight, preferably from 0.1% to 3% by weight of one or more additives based on the total weight of the composition, chosen among stabilizers, fluidizing agent, dye, surfactants, whitening agents, antioxidants chain extenders, lubricants, nucleating agents, waxes and their mixture, preferably among stabilizers, antioxidants and their mixture.

Preferably, the stabilizer is chosen among heat stabilizer, UV stabilizer, light stabilizer.

In another embodiment, the translucent composition consists of :

a) From 45 to 97.89% by weight, based on the total weight of the composition, of a semi-crystalline polyamide matrix comprising :

- 45 to 99% by weight of a polyamide A based on the total weight of the matrix, wherein the C/N ratio of the polyamide A is greater than 6.5, preferably greater than 8, even more preferably greater than 9,
- 1 to 55% by weight of a polyamide B based on the total weight of the polyamide matrix, wherein the C/N ratio of the polyamide A is greater than 6.5, preferably greater than 8, even more preferably greater than 9 ;

polyamides A and B have, in absolute value, at least one difference in C/N ratios equal to | C/N ratio (A) - C/N ratio (B) | ≤ 3, preferably | C/N ratio (A) - C/N ratio (B) | ≤ 2, even more preferably | C/N ratio (A) - C/N ratio (B)| ≤ 1,

the polyamide A comprising at least 45 mol%, preferably 65 mol%, even more preferably 90 mol%, of at least one unit comprising a number of carbon atoms between the amide functional groups (including the carbonyl of the amide) denoted C1,

the polyamide B comprising at least 30 mol%, preferably at least 40 mol%, advantageously at least 45 mol%, of at least one unit comprising a number of carbon atoms between the amide functions (including the carbonyl of the amide) denoted C2,

with at least one of the equations IC1-C2| ≤ 3 being fulfilled, if the polyamides A and B each comprise more than one C1 and/or more than one C2 ;

b) from 2 to 25% by weight, preferably from 3 to 20%, based on the total weight of the composition, of short glass fibers ;
c) from 0.01 to 20% by weight, based on the total weight of the composition, of PEBA ;
d) from 0,1% to 10% by weight of additives based on the total weight of the composition, chosen among stabilizers, fluidizing agent, dye, surfactants, whitening agents, antioxidants chain extenders, lubricants, nucleating agents, waxes and their mixture.

***Process***

According to the invention, the process for preparing the composition comprises the following steps :

a) mixing the polyamide A, the polyamide B and the glass fibers in an extruder at a temperature from 230 to 330°C, preferably from 230 to 300°C to obtain granules

b) injecting the granules at a temperature from 230 to 330°C, preferably from 230 to 300°C and on an injection press to obtain the articles.

In one embodiment, the step a) of the process further comprises the addition of the impact modifier with the polyamide A, the polyamide B and the glass fibers.

***Use***

According to the invention, the composition is used for sports article, in particular a sports boot, in particular a ski boot or part of a ski boot or a spiked rigid boot, such as a soccer boot, rugby boot or American football boot, a hockey boot or part of a hockey boot, or a running shoe, a golf ball or part of a golf ball, or a lacrosse stick, a hockey article such as a helmet and sports articles for the protection of the head, shoulders, elbows, hands, knees, back or shin, such as helmets, gloves, shoulder pads, elbow pads, knee pads or shin guards.

**Exemples**

***Example 1***

*Preparation of the compositions*

The compositions illustrated in Table 1 were prepared by melt blending polyamide granules with glass fibres. This mixture was compounded on a co-rotating twin-screw extruder with a diameter of 26 mm and a flat temperature profile (T°) of 250°C. The screw speed was 500 rpm and the flow rate 25 kg/h. The compositions were then moulded on an injection moulding machine (Engel) at a set temperature of 240°C for the feed, 260°C for the nozzle and a mould temperature of 60°C for test-piece to study the mechanical and optical properties of the compositions according to the standards below.

[Table 1]

| | CE1 Comparative | CE2 Comparative | E1 Invention | E2 Invention |
|---|---|---|---|---|
| PA111 | 65 | 68 | 65 | 68 |
| PA12[2] | 22 | 23 | 22 | 23 |
| NE-glass CNG3PA820S[3] | 3 | 3 | 3 | 3 |
| Pebax®Rnew® 40R53 SP 01[4] | - | - | 10 | 6 |
| Exxelor®VA1803[5] | 10 | 6 | - | - |
| \| ratio C/N(A1) - ratio C/N (A2) \| | 1 | 1 | 1 | 1 |
| \| C1-C2\| | 1 | 1 | 1 | 1 |

1 PA11 is an aliphatic semi-crystalline polyamide having inherent viscosity of 1.4, sold under the trademark Rilsan® KNO purchased from Arkema France.
2 PA12 is an aliphatic semi-crystalline polyamide sold under the trademark Rilsamid® is a purchased from Arkema France.
3 NE-glass CNG3PA820S is NE-type glass fibers purchased from Nittobo.
4 Pebax® Rnew® 40R53 SP 01 is an impact modifier corresponding to a polyether block copolymer purchased from Arkema.
5 Exxelor®VA1803 is an impact modifier corresponding to an impact modifier corresponding to an ethylene copolymer functionalized with maleic anhydride grafted from ExxonMobil Chemical™.

*Evaluating mechanical and optical properties*

The machine used to measure the mechanical properties of the samples is INSTRON 5982 for Flexure, Konica Minolta CM3610A for Transmittance and Haze.

The flexural modulus was measured in line with ISO 178:2019 on ISO 179:2023 impact bars.

Plates measuring 100 x 100 x 1 $mm^3$ were injection moulded for transmittance and Haze measurements. The

following parameters were used: unpolished mould ; ENGEL VICTORY 500, 160T hydraulic press ; injection temperature (feed/nozzle = 260°C/280°C) ; mould temperature = 60°C ; holding time = 20s ; material holding pressure = 525 bars ; cooling time = 20 s.

[Table 2]

| | CE1 Comparative | CE2 Comparative | E1 Invention | E2 Invention |
|---|---|---|---|---|
| Flexural modulus (MPa) | >1000 | >1000 | >1000 | >1000 |
| Transmittance 1mm | 60 | 65 | 75 | 77 |
| Haze 3mm | 99 | 98 | 77 | 77 |

The use of the right impact modifier with NE-glass fiber in the compositions results in higher flexural modulus as well as higher transmittance and lower haze.

The compositions according to the invention are therefore more translucent while exhibiting good mechanical properties.

## Claims

1. A translucent composition comprising :

   a) From 55 to 97.99 by weight, based on the total weight of the composition, of a semi-crystalline polyamide matrix comprising :

   - 45 to 99% by weight of a polyamide A based on the total weight of the matrix, wherein the C/N ratio of the polyamide A is greater than 6.5, preferably greater than 8, even more preferably greater than 9,
   - 1 to 55% by weight of a polyamide B based on the total weight of the polyamide matrix, wherein the C/N ratio of the polyamide A is greater than 6.5, preferably greater than 8, even more preferably greater than 9 ;
   polyamides A and B have, in absolute value, at least one difference in C/N ratios equal to | C/N ratio (A) - C/N ratio (B) | ≤ 3, preferably | C/N ratio (A) - C/N ratio (B) | ≤ 2, even more preferably | C/N ratio (A) - C/N ratio (B) | ≤ 1,
   the polyamide A comprising at least 45 mol%, preferably 65 mol%, even more preferably 90 mol%, of at least one unit comprising a number of carbon atoms between the amide functional groups (including the carbonyl of the amide) denoted C1,
   the polyamide B comprising at least 30 mol%, preferably at least 40 mol%, advantageously at least 45 mol%, of at least one unit comprising a number of carbon atoms between the amide functions (including the carbonyl of the amide) denoted C2,
   with at least one of the equations IC1-C2| ≤ 3 being fulfilled, if the polyamides A and B each comprise more than one C1 and/or more than one C2 ;

   b) From 2 to 25% by weight, based on the total weight of the composition, of short glass fibers, preferably 3 to 20% of glass fibers ;
   c) From 0.01 to 20% by weight, based on the total weight of the composition, of a copolymer containing polyamide blocks and polyether blocks (PEBA copolymer).

2. Composition according to claim 1,wherein the following condition is fulfilled: | ratio C/N(A) - ratio C/N (B) | ≤ 2, preferably | ratio C/N(A) - ratio C/N (B) | ≤ 1.

3. Composition according to any of claims 1 or 2, wherein at least one of the following equations is fulfilled: | C1-C2| ≤ 2, preferably | C1-C2| ≤ 1.

4. A composition according to any of claims 1 to 3, wherein the polyamide A and the polyamide B have a linear aliphatic structure.

5. A composition according to any of claims 1 to 4, wherein the polyamide A and the polyamide B are partially or totally bio-sourced.

**6.** A composition according to any of claims 1 to 5, wherein the polyamide A is chosen among PA10, PA11, PA12, PA1010, PA1012, PA612, preferably among PA11 and PA12.

**7.** A composition according to any of claims 1 to 6, wherein the polyamide B is chosen among PA10, PA11, PA12, PA1010, PA1012 and PA612, preferably among PA12, PA1010 and PA1012.

**8.** A composition according to any of claims 1 to 7, wherein the matrix comprises a blend of polyamide A and polyamide B chosen among :

- PA 12 as Polyamide A and PA 1012 as Polyamide B ;
- PA 11 as Polyamide A and PA12 as Polyamide B ;
- PA 11 as Polyamide A and PA1012 as Polyamide B ;
- PA 11 as Polyamide A and PA1010 as Polyamide B.

**9.** A composition according to any of claims 1 to 9 comprising from 0.1 to 10% by weight of additives, preferably from 0.1 to 3% by weight based on the total weight of the composition, chosen among stabilizers, fluidizing agent, dye, surfactants, whitening agents, antioxidants chain extenders, lubricants, nucleating agents, waxes and their mixture, preferably among stabilizers, antioxidants and their mixture.

**10.** A composition according to any of claims 1 to 9, wherein the glass fiber are chosen among :

- E glass fiber comprising from : from 53 to 55 wt% $SiO_2$, from 20 to 24 wt% MgO+CaO, from 6 to 9 wt% $B_2O$, from 12 to 16 wt% $Al_2O_3$ based on the total weight of the glass fibre ;
- NE glass fiber comprising from 53 to 57 wt% $SiO_2$, from 13 to 16 wt% $Al_2O_3$, from 15 to 19 wt% $B_2O_3$, from 3 to 6 wt% MgO, from 2 to 5 wt% CaO, from 1 to 4 wt% $TiO_2$, from 0 to 0.2 wt% $Li_2O$, from 0 to 0,2 wt% $Na_2O$, from 0 to 0.2 wt% $K_2O$, from 0.2 to 1 wt% $F_2$; from 7 to 10 wt% MgO+CaO based on the total weight of the glass fiber ; and their mixtures. preferably NE.

**11.** A composition according to any of claims 1 to 10, wherein the glass fibers are flat.

**12.** A composition according to any of claims 1 to 11, wherein the polyamide block of the PEBA copolymer is chosen from blocks of PA 6, PA610, PA 11, PA 12, PA 5.4, PA 5.9, PA 5.10, PA 5.12, PA 5.13, PA 5.14, PA 5.16, PA 5.18, PA 5.36, PA 6.4, PA 6.9, PA 6.10, PA 6.12, PA 6.13, PA 6.14, PA 6.16, PA 6.18, PA 6.36, PA 10.4, PA 10.9, PA 10.10, PA 10.12, PA 10.13, PA 10.14, PA 10.16, PA 10.18, PA 10.36, PA 12.4, PA 12.9, PA 12.10, PA 12.12, PA 12.13, PA 12.14, PA 12.16, PA 12.18 or PA 12.36, their mixture, or their copolyamides, and/or the polyether block of the PEBA copolymer is chosen from PEG, PPG, PO3G, PTMG, their mixtures or their copolymers.

**13.** A composition according to any of claims 1 to 12, wherein the polyamide block and polyether block of the PEBA copolymer are chosen among :

- PA 11 as polyamide block and PEG as polyether block ;
- PA 11 as polyamide block and PTMG as polyether block ;
- PA 12 as polyamide block and PEG as polyether block ;
- PA 12 as polyamide block and PTMG as polyether block.

**14.** Process for preparing a composition according to any of claims 1 to 13, comprising the following steps :

c) mixing the polyamide A, the polyamide B and the glass fibers in an extruder at a temperature from 230 to 330°C, preferably from 230 to 300°C to obtain granules
d) injecting the granules at a temperature from 230 to 330°C, preferably from 230 to 300°C on an injection press to obtain the articles.

**15.** Use of a composition according to claims 1 to 14 for sports article, in particular a sports boot, in particular a ski boot or part of a ski boot or a spiked rigid boot, such as a soccer boot, rugby boot or American football boot, a hockey boot or part of a hockey boot, or a running shoe, a golf ball or part of a golf ball, or a lacrosse stick, a hockey article such as a helmet and sports articles for the protection of the head, shoulders, elbows, hands, knees, back or shin, such as helmets, gloves, shoulder pads, elbow pads, knee pads or shin guards.

Europäisches Patentamt
European Patent Office
Office européen des brevets

# EUROPEAN SEARCH REPORT

Application Number
EP 24 30 7199

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/369098 A1 (YASUDA MAHO [JP] ET AL) 22 December 2016 (2016-12-22) | 1-5,7,9, 11-15 | INV. C08L77/02 |
| A | * page 10 - page 11; example 3; table 3 * | 6,8,10 | ADD. C08G69/14 C08G69/40 |
| X | US 2020/255661 A1 (YASUDA MAHO [JP] ET AL) 13 August 2020 (2020-08-13) | 1-5,7, 9-15 | |
| A | * page 7; example 2; table 2 * * paragraph [0079]; claim 1 * | 6,8 | |
| X | US 2020/208031 A1 (LEE SANG HWA [KR] ET AL) 2 July 2020 (2020-07-02) | 1-6,9, 11-15 | |
| A | * page 6; example 1; table 1 * * paragraph [0053]; claim 1 * * paragraph [0042] * | 7,8,10 | |

TECHNICAL FIELDS SEARCHED (IPC)

C08G
C08L

The present search report has been drawn up for all claims

| Place of search | Date of completion of the search | Examiner |
|---|---|---|
| Munich | 22 May 2025 | Wohnhaas, Christian |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 30 7199

This annex lists the patent family members relating to the patent documents cited in the above-mentioned European search report. The members are as contained in the European Patent Office EDP file on
The European Patent Office is in no way liable for these particulars which are merely given for the purpose of information.

22-05-2025

| Patent document cited in search report | Publication date | Patent family member(s) | Publication date |
|---|---|---|---|
| US 2016369098 A1 | 22-12-2016 | CN 106255725 A | 21-12-2016 |
| | | CN 110483983 A | 22-11-2019 |
| | | EP 3114171 A1 | 11-01-2017 |
| | | FR 3018280 A1 | 11-09-2015 |
| | | JP 6515114 B2 | 15-05-2019 |
| | | JP 2017510677 A | 13-04-2017 |
| | | KR 20160129889 A | 09-11-2016 |
| | | KR 20180069101 A | 22-06-2018 |
| | | TW 201602236 A | 16-01-2016 |
| | | US 2016369098 A1 | 22-12-2016 |
| | | WO 2015132510 A1 | 11-09-2015 |
| US 2020255661 A1 | 13-08-2020 | CN 111344332 A | 26-06-2020 |
| | | EP 3461854 A1 | 03-04-2019 |
| | | JP 7341989 B2 | 11-09-2023 |
| | | JP 2020535269 A | 03-12-2020 |
| | | JP 2023134432 A | 27-09-2023 |
| | | KR 20200059273 A | 28-05-2020 |
| | | US 2020255661 A1 | 13-08-2020 |
| | | WO 2019063608 A1 | 04-04-2019 |
| US 2020208031 A1 | 02-07-2020 | CN 111378277 A | 07-07-2020 |
| | | EP 3674345 A1 | 01-07-2020 |
| | | KR 20200082436 A | 08-07-2020 |
| | | US 2020208031 A1 | 02-07-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 3966284 A
- EP 3512914 A
- EP 3486287 A
- EP 3444114 A
- EP 3309199 A
- GB 796212010 T
- EP 613919 A
- JP 2004346274 B
- JP 2004352794 B
- EP 1482011 A